# EUROPEAN PATENT SPECIFICATION

(11) **EP 3 923 619 B1**
(45) Date of publication and mention of the grant of the patent: **05.07.2023**
(21) Application number: 21190215.0
(22) Date of filing: 25.10.2017
(51) Int. Cl.: H04W 24/04, H04W 28/02, H04L 1/00, H04L 1/08, H04L 5/00, H04W 40/34, H04W 8/04

(54) **DATA TRANSMISSION MODE DETERMINING METHOD, NETWORK DEVICE, AND COMPUTER STORAGE MEDIUM**
VERFAHREN ZUR BESTIMMUNG DES DATENÜBERTRAGUNGSMODUS, NETZWERKVORRICHTUNG UND COMPUTERSPEICHERMEDIUM
PROCÉDÉ DE DÉTERMINATION DE MODE DE TRANSMISSION DE DONNÉES, DISPOSITIF DE RÉSEAU ET SUPPORT DE STOCKAGE INFORMATIQUE

(43) Date of publication of application: 15.12.2021
(62) Divisional of application: 17929631.4
(73) Proprietor: GUANGDONG OPPO MOBILE TELECOMMUNICATIONS CORP., LTD., Dongguan, Guangdong 523860 (CN)
(72) Inventor: YANG, Ning, Dongguan, 523860 (CN)
(74) Representative: Taor, Simon Edward William

(56) References cited:
- HUAWEI ET AL: "Activating and deactivating packet duplication", 3GPP DRAFT; R2-1703529 ACTIVATING AND DEACCTIVATING PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Spokane, Washington, USA; 20170403 - 20170407 3 April 2017 (2017-04-03), XP051245374, Retrieved from the Internet: URL:http://www.3gpp.org/ftp/Meetings_3GPP_ SYNC/RAN2/Docs/ [retrieved on 2017-04-03]
- ITL: "Configuration of PDCP duplication", 3GPP DRAFT; R2-1709628, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051319343, Retrieved from the Internet: URL:http://www.3gpp.org/ftp/Meetings_3GPP_ SYNC/RAN2/Docs/ [retrieved on 2017-08-20]
- ZTE: "Consideration on the activation/deactivation of data duplication for CA", 3GPP DRAFT; R2-1704660 CONSIDERATION ON THE ACTIVATION OR DEACTIVATION OF DATA DUPLICATION FOR CA, 3RD GENERATION PARTNERSHIP PROJECT (3GPP), MOBILE COMPETENCE CENTRE ; 650, ROUTE DES LUCIOLES ; F-069 , vol. RAN WG2, no. Hangzhou, China; 20170515 - 20170519 14 May 2017 (2017-05-14), XP051275205, Retrieved from the Internet: URL:http://www.3gpp.org/ftp/Meetings_3GPP_ SYNC/RAN2/Docs/ [retrieved on 2017-05-14]
- QUALCOMM INCORPORATED: "Discussion on PDCP duplication", 3GPP DRAFT; R2-1705056, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275538, Retrieved from the Internet: URL:http://www.3gpp.org/ftp/Meetings_3GPP_ SYNC/RAN2/Docs/ [retrieved on 2017-05-14]

## Description

### BACKGROUND

### Technical field

The present invention relates to the field of information processing technologies, and in particular, to a method for determining a data transmission mode and a terminal device.

### Related Art

At current, with pursuit of rate, delay, high-speed mobility, and energy efficiency by people and diversification and complication of services in future life, the 3GPP international standard organization begins to research and develop 5G accordingly. For ultra-reliable low-latency communication (URLLC), many mechanisms are formulated in 5G standard research to ensure reliable transmission thereof. Therefore, effective and dynamic change in a data transmission form of UE is significant for both improving system capacity and considering data transmission reliability.

An example of a known transmission method is Packed Duplication which provides a gain in the resource utilization under well-defined criteria. The criteria are used to trigger signaling for activating/deactivating packet duplication as required. In particular, possible criteria and procedures to perform the activation/deactivation of the packet duplication transmission mode are discussed in the following documents:
HUAWEI ET AL: "Activating and deactivating packet duplication", 3GPP DRAFT; R2-1703529 ACTIVATING AND DEACTIVATING PACKET DUPLICATION .
ITL: "Configuration of PDCP duplication", 3GPP DRAFT, R2-1709628 .
ZTE: "Consideration on the activation/deactivation of data duplication for CA", 3GPP DRAFT, R2-1704660 CONSIDERATION ON THE ACTIVAATION OR DEACTIVATION OF A PACKET DUPLICATION FOR CA .QUALCOMM INCORPORATED: "Discussion on PDCP duplication", 3GPP DRAFT, R2-1705056

### SUMMARY

The invention is set out in the appended set of claims. To resolve the foregoing technical problem, embodiments of the present invention provide a method for determining a data transmission mode according to claim 1 and a terminal device according to claim 3.

In the technical solutions of the embodiments of the present invention, a data transmission mode for the terminal device can be determined according to a parameter reported by the terminal device and/or related information of the network side, thereby both improving system capacity and considering data transmission reliability.

### BRIEF DESCRIPTION OF THE DRAWINGS

FIG. 1 is a schematic flowchart of a data transmission mode determining method according to an embodiment of the present invention;
FIG. 2-1 is a schematic diagram of a data structure according to an embodiment of the present invention;
FIG. 2-2 is a schematic diagram 1 of duplication transmission according to an embodiment of the present invention;

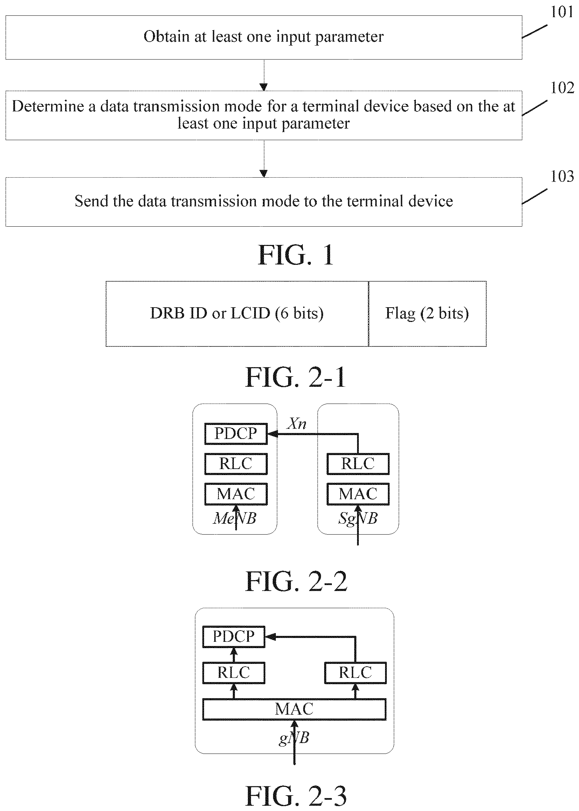

FIG. 2-3 is a schematic diagram 2 of duplication transmission according to an embodiment of the present invention;

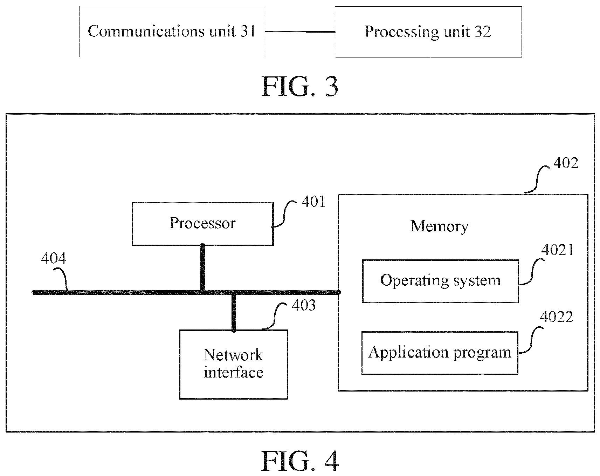

FIG. 3 is a schematic composition diagram of a network device according to an embodiment of the present invention; and
FIG. 4 is a schematic diagram of a hardware architecture according to an embodiment of the present invention.

**DETAILED DESCRIPTION** The invention corresponds to the Embodiment 1 below and the other embodiments are not encompassed by the wording of the claims but are considered as useful for understanding the invention.

To be capable of understanding features and technical content of the embodiments of the present invention in more details, implementation of the embodiments of the present invention is described in detail below with reference to the accompanying drawings. The accompanying drawings are used for only reference, but not intended to limit the embodiments of the present invention.

### Embodiment 1

This embodiment of the present invention provides a data transmission mode determining method, from a perspective of a network device. As shown in FIG. 1, the method includes the following steps.

Step 101: Obtain at least one input parameter, where the at least one input parameter includes transmission related information reported by a terminal device, and/or related information of a network side.

Step 102: Determine a data transmission mode for the terminal device based on the at least one input parameter.

Step 103: Send the data transmission mode to the terminal device.

Herein, the network device may be a device such as a network side base station. Provided that a device can select and deliver a transmission mode, the device may be an object protected by this embodiment.

The foregoing at least one input parameter may include actively reported content, and/or may further include related information detected or directly obtained by the network side.

Specifically, the transmission related information reported by the terminal device includes at least one of the following:
a channel-specific measurement value reported by the terminal device; and data transmission mode indication information reported by the terminal device.

The related information of the network side includes at least one of the following:
a quality of service QoS requirement of the terminal device; an uplink channel condition obtained by the network side through measurement; a data receiving error ratio obtained by the network side through statistics; and load information of the network side.

In the method about how to determine a data transmission mode for the terminal device based on the at least one input parameter, the data transmission mode may be determined according to one of the foregoing plurality of input parameters, or may be determined by using a combination of more than one of the plurality of input parameters. Description is made below respectively for the foregoing plurality of parameters:
The channel-specific measurement value reported by the terminal device may be RSRP, and/or RSRQ, and/or an SIR, and/or an SINR, and/or CSI; and may be reported through a PUCCH, or a PUSCH, or RRC signaling.

The data transmission mode indication information reported by the terminal device: UE selects a data transmission form according to channel measurement; and indicates the data transmission mode indication information to the network side through a MAC CE mode.

In the use method about the foregoing two parameters, the terminal device may report only one of the parameters, and then the network device determines, by using the channel-specific measurement value, a data transmission mode that is to be used. For example, when a signal-to-noise ratio of a channel is relatively large, indicating that quality of the channel is relatively good, data transmission may be performed in a link switching mode or a link aggregation mode; or when a signal-to-noise ratio of a channel is relatively small, indicating that quality of the channel is relatively poor, data transmission may be performed in a packet duplication mode.

When the terminal device selects a data transmission mode, the terminal device may directly report data transmission mode indication information, so that the network device may determine the data transmission mode for the terminal device based on the indication information.

Further, the uplink channel condition obtained by the network side through measurement is, for example, a measured SINR of an uplink channel.

The data receiving error ratio obtained by the network side through statistics may specifically include a data receiving block error rate (BLER) or bit error ratio (BER) on which the network side collects statistics. When a data transmission mode is selected by using this parameter, processing may be performed as follows: If the BLER or BER is quite low, the link aggregation mode the link switching mode may be selected; or if the BLER or BER is quite high, the packet duplication mode may be selected.

Load of the network side: if network load on a side is quite heavy, link switching may be selected.

The quality of service QoS requirement of the terminal device: the data transmission mode is flexibly changed according to QoS requirements of UE for rate and reliability and a channel condition, to satisfy the QoS requirement of the UE.

Only one of the foregoing several parameters of the network side may be used, or the parameters may be used at the same time. For example, processing manners of individually using the load of the network side, and individually using the data receiving error ratio of the network side have been provided above, and details are not described herein again. A manner of individually using the QoS of the UE may be to select the data transmission mode based on a condition satisfying the QoS of the UE. For example, it is determined, based on the condition of the QoS, to use the link switching mode or the link aggregation mode, or the packet duplication mode may be selected based on the condition thereof. If a plurality of parameters is used at the same time, an intersection set of modes selected with reference to two parameters may be selected. For example, if it is determined, based on the data receiving error ratio of the network side, that the link aggregation mode and the link switching mode may be selected, and then it is determined, according to the QoS, that only the link switching mode can be selected, the link switching mode is selected as the data transmission mode of the UE.

Certainly, a transmission mode may be further determined with reference to the parameter reported by the terminal device, for example, jointly determined with reference to the parameter reported by the terminal device and a related parameter of the network side. If the terminal device reports the channel-specific measurement value, and then the related parameter of the network side is the data receiving error ratio, whether a data transmission mode can be determined may be first determined with reference to the measurement value for the channel. When two or more data transmission modes are determined, a data transmission mode of the two or more data transmission modes that the terminal device is in may be then determined again with reference to the data receiving error ratio.

It may be further understood that, in a scenario of performing determining by combining a plurality of parameters, priorities may be further set for different parameters. For example, a priority of the channel measurement value of the terminal device and a priority of the indication information of the data transmission mode of the terminal device may be set to be highest, a priority of the uplink channel condition detected by the network side and a priority of the data error ratio detected by the network side may be set to be higher, and a priority of the QoS of the terminal device may be lower. To be specific, when determining is performed by combining a plurality of parameters, if the measurement value is received, the data transmission mode is determined first by using the measurement value. Certainly, the foregoing priority setting is only an example. Actually, setting may be performed in another priority order, but enumeration is not performed again in this embodiment. All cases of combination of a plurality of parameters and different priority settings fall within the scenario protection scope provided in this embodiment.

The network side delivers an order to the UE to indicate a data transmission mode that the UE uses. The sending the data transmission mode to the terminal device includes the following plurality of manners:
Manner 1. Send an order including the data transmission mode to the terminal device in a form of a media access control MAC control element CE.
Manner 2. Send an order including the data transmission mode to the terminal device in a form of a physical downlink control channel order.
Manner 3. Send an order including the data transmission mode to the terminal device in a form of radio resource control RRC signaling.

Further, the order including the data transmission mode includes: bearer information used to change the data transmission mode, and the data transmission mode.

If it is in the MAC CE form, a corresponding logic channel ID, that is, LCID is defined for the new MAC CE. The MAC CE includes two pieces of information. One is the bearer information used to change the data transmission mode, an identifier (ID) of a data radio bearer DRB between a terminal and a base station, or an identifier (ID) of a logic channel corresponding to the bearer (as shown in FIG. 2-1). The other is a data transmission form, and a mode of the link aggregation, the link switching, or the packet duplication that is used may be indicated through the data transmission form. A specific data transmission form may be a flag field in FIG. 2-1, and may be 2 bits, and it is assumed that the link aggregation mode may be 00, the link switching mode may be 01, and the packet duplication mode may be 10. If there is further another mode, the mode may be set to 11. Certainly, the foregoing mode represented by 2 bits is only an example, and there may be further another setting manner, but enumeration is not performed herein again.

If it is in the form of the PDCCH order/RRC signaling, the PDCCH order/RRC signaling includes two pieces of information. One is the bearer information used to change the data transmission mode, an ID of a DRB, or an ID of a logic channel corresponding to the bearer. The other is a data transmission form that is the link aggregation, the link switching, or the packet duplication.

The foregoing provided processing manner may be further applicable to a carrier aggregation (CA) scenario. When the foregoing provided processing manner is applicable to the CA scenario, a difference from the foregoing is in that, the data transmission mode includes only two modes: carrier aggregation (CA) and packet duplication.

For ultra-reliable low-latency communication (URLLC), many mechanisms such as packet data convergence protocol (PDCP) duplication in a dual-connectivity DC scenario, or PDCP duplication in a carrier aggregation CA scenario are formulated in 5G standard research to ensure reliable transmission thereof. For example, FIG. 2-2 and FIG. 2-3 respectively present the PDCP duplication in the DC scenario and the PDCP duplication in the CA scenario: A PDCP protocol data unit (PDU) generated by one PDCP layer is transmitted on two radio link control (RLC) protocols, and then encapsulated in different TBs at media access control (MAC) layers of a master cell group (MCG) and a secondary cell group (SCG), to improve PDCP PDU transmission reliability. A difference between FIG. 2-2 and FIG. 2-3 is in that, transmission may be performed at two MAC layers respectively or at a same MAC layer. However, the data transmission reliability is at the cost of sacrificing radio resources and reducing a system throughput. Therefore, when signal quality is quite good, only one packet is transmitted, and data transmission reliability may be ensured similarly in dependence on HARQ transmission.

Three data transmission forms that may be performed by architectures shown in FIG. 2-2 and FIG. 2-3 are as follows: Link aggregation: it aims to increase a throughput, and two legs are activated at a same time point to transmit different packets. Link switching: it aims to seek a best link to perform data transmission, two legs are activated at different time points, and data transmission is performed by using a signal having best quality. For example, in EN-DC, LTE is used as a backup of an NR link. Packet duplication: it mainly aims to provide reliability, and two legs are activated at a same time point to transmit a same packet.

It can be learned that, through the foregoing solution, a data transmission mode for the terminal device can be determined according to a parameter reported by the terminal device and/or related information of the network side, thereby both improving system capacity and considering data transmission reliability.

The following illustrates a network device. As shown in FIG. 3, the network device includes:
a communications unit 31, for obtaining at least one input parameter, where the at least one input parameter includes transmission related information reported by a terminal device, and/or related information of a network side; and sending a data transmission mode to the terminal device; and
a processing unit 32, for determining the data transmission mode for the terminal device based on the at least one input parameter.

Herein, the network device may be a device such as a network side base station. Provided that a device can select and deliver a transmission mode, the device may be an object protected by this embodiment.

The foregoing at least one input parameter may include actively reported content, and/or may further include related information detected or directly obtained by the network side.

Specifically, the transmission related information reported by the terminal device includes at least one of the following:
a channel-specific measurement value reported by the terminal device; and data transmission mode indication information reported by the terminal device.

The related information of the network side includes at least one of the following:
a quality of service QoS requirement of the terminal device; an uplink channel condition obtained by the network side through measurement; a data receiving error ratio obtained by the network side through statistics; and load information of the network side.

In the method about how to determine a data transmission mode for the terminal device based on the at least one input parameter, the data transmission mode may be determined according to one of the foregoing plurality of input parameters, or may be determined by using a combination of more than one of the plurality of input parameters. Description is made below respectively for the foregoing plurality of parameters:
The channel-specific measurement value reported by the terminal device may be RSRP, and/or RSRQ, and/or an SIR, and/or an SINR, and/or CSI; and may be reported through a PUCCH, or a PUSCH, or RRC signaling.

The data transmission mode indication information reported by the terminal device: UE selects a data transmission form according to channel measurement; and indicates the data transmission mode indication information to the network side through a MAC CE mode.

In the use method about the foregoing two parameters, the terminal device may report only one of the parameters, and then the network device determines, by using the channel-specific measurement value, a data transmission mode that is to be used. For example, when a signal-to-noise ratio of a channel is relatively large, indicating that quality of the channel is relatively good, data transmission may be performed in a link switching mode or a link aggregation mode; or when a signal-to-noise ratio of a channel is relatively small, indicating that quality of the channel is relatively poor, data transmission may be performed in a packet duplication mode.

When the terminal device selects a data transmission mode, the terminal device may directly report data transmission mode indication information, so that the network device may determine the data transmission mode for the terminal device based on the indication information.

Further, the uplink channel condition obtained by the network side through measurement is, for example, a measured SINR of an uplink channel.

The data receiving error ratio obtained by the network side through statistics may specifically include a data receiving block error rate (BLER) or bit error ratio (BER) on which the network side collects statistics. When a data transmission mode is selected by using this parameter, processing may be performed as follows: If the BLER or BER is quite low, the link aggregation mode the link switching mode may be selected; or if the BLER or BER is quite high, the packet duplication mode may be selected.

Load of the network side: if network load on a side is quite heavy, link switching may be selected.

The quality of service QoS requirement of the terminal device: the data transmission mode is flexibly changed according to QoS requirements of UE for rate and reliability and a channel condition, to satisfy the QoS requirement of the UE.

Only one of the foregoing several parameters of the network side may be used, or the parameters may be used at the same time. For example, processing manners of individually using the load of the network side, and individually using the data receiving error ratio of the network side have been provided above, and details are not described herein again. A manner of individually using the QoS of the UE may be to select the data transmission mode based on a condition satisfying the QoS of the UE. For example, it is determined, based on the condition of the QoS, to use the link switching mode or the link aggregation mode, or the packet duplication mode may be selected based on the condition thereof. If a plurality of parameters is used at the same time, an intersection set of modes selected with reference to two parameters may be selected. For example, if it is determined, based on the data receiving error ratio of the network side, that the link aggregation mode and the link switching mode may be selected, and then it is determined, according to the QoS, that only the link switching mode can be selected, the link switching mode is selected as the data transmission mode of the UE.

Certainly, a transmission mode may be further determined with reference to the parameter reported by the terminal device, for example, jointly determined with reference to the parameter reported by the terminal device and a related parameter of the network side. If the terminal device reports the channel-specific measurement value, and then the related parameter of the network side is the data receiving error ratio, whether a data transmission mode can be determined may be first determined with reference to the measurement value for the channel. When two or more data transmission modes are determined, a data transmission mode of the two or more data transmission modes that the terminal device is in may be then determined again with reference to the data receiving error ratio.

It may be further understood that, in a scenario of performing determining by combining a plurality of parameters, priorities may be further set for different parameters. For example, a priority of the channel measurement value of the terminal device and a priority of the indication information of the data transmission mode of the terminal device may be set to be highest, a priority of the uplink channel condition detected by the network side and a priority of the data error ratio detected by the network side may be set to be higher, and a priority of the QoS of the terminal device may be lower. To be specific, when determining is performed by combining a plurality of parameters, if the measurement value is received, the data transmission mode is determined first by using the measurement value. Certainly, the foregoing priority setting is only an example. Actually, setting may be performed in another priority order, but enumeration is not performed again in this embodiment. All cases of combination of a plurality of parameters and different priority settings fall within the scenario protection scope provided in this embodiment.

The network side delivers an order to the UE to indicate a data transmission mode that the UE uses. The sending the data transmission mode to the terminal device includes the following plurality of manners:
Manner 1. The communications unit 31 sends an order including the data transmission mode to the terminal device in a form of a media access control MAC control element CE.
Manner 2. The communications unit 31 sends an order including the data transmission mode to the terminal device in a form of a physical downlink control channel order.
Manner 3. The communications unit 31 sends an order including the data transmission mode to the terminal device in a form of radio resource control RRC signaling.

Further, the order including the data transmission mode includes: bearer information used to change the data transmission mode, and the data transmission mode.

If it is in the MAC CE form, a corresponding logic channel ID, that is, LCID is defined for the new MAC CE. The MAC CE includes two pieces of information. One is the bearer information used to change the data transmission mode, an identifier (ID) of a data radio bearer DRB between a terminal and a base station, or an identifier (ID) of a logic channel corresponding to the bearer (as shown in FIG. 2-1). The other is a data transmission form, and a mode of the link aggregation, the link switching, or the packet duplication that is used may be indicated through the data transmission form. A specific data transmission form may be a flag field in FIG. 2-1, and may be 2 bits, and it is assumed that the link aggregation mode may be 00, the link switching mode may be 01, and the packet duplication mode may be 10. If there is further another mode, the mode may be set to 11. Certainly, the foregoing mode represented by 2 bits is only an example, and there may be further another setting manner, but enumeration is not performed herein again.

If it is in the form of the PDCCH order/RRC signaling, the PDCCH order/RRC signaling includes two pieces of information. One is the bearer information used to change the data transmission mode, an ID of a DRB, or an ID of a logic channel corresponding to the bearer. The other is a data transmission form that is the link aggregation, the link switching, or the packet duplication.

The foregoing provided processing manner may be further applicable to a carrier aggregation (CA) scenario. When the foregoing provided processing manner is applicable to the CA scenario, a difference from the foregoing is in that, the data transmission mode includes only two modes: carrier aggregation (CA) and packet duplication.

It can be learned that, through the foregoing solution, a data transmission mode for the terminal device can be determined according to a parameter reported by the terminal device and/or related information of the network side, thereby both improving system capacity and considering data transmission reliability.

This application further provides a hardware composition architecture of a network device. As shown in FIG. 4, the network device includes: at least one processor 401, a memory 402, and at least one network interface 403. Components are coupled together through a bus system 404. It can be understood that, the bus system 404 is configured to implement connection and communication between these components. In addition to a data bus, the bus system 404 further includes a power bus, a control bus, and a status signal bus. However, for the sake of clear description, various buses are all marked as the bus system 404 in FIG. 4.

It can be understood that, the memory 402 in this application may be a volatile memory or a non-volatile memory, or may include both a volatile memory and a non-volatile memory.

In some implementations, the memory 402 stores the following elements, executable modules or data structures, or a subset thereof, or an extension set thereof:
an operating system 4021 and an application program 4022.

The processor 401 is configured to perform all method steps described in Embodiment 1, and details are not described herein again.

This application provides a computer storage medium, where the computer storage medium stores a computer executable instruction, and when the computer executable instruction is executed, a step of the method in Embodiment 1 is implemented. Details are not described herein again.

In the embodiments of the present invention, when the foregoing apparatus is implemented in a form of a software functional module and sold or used as an independent product, the foregoing apparatus may be stored in a computer-readable storage medium. Based on such an understanding, the technical solutions of the embodiments of the present invention essentially, or the part contributing to the prior art may be implemented in the form of a software product. The computer software product is stored in a storage medium, and includes several instructions for instructing a computer device (which may be a personal computer, a server, a network device, or the like) to perform all or a part of the method of the embodiments of the present invention. The foregoing storage medium includes: any medium that can store program codes, such as a USB flash disk, a removable hard disk, a read-only memory (ROM), a magnetic disk, or an optical disk. Therefore, the embodiments of the present invention are not limited to any particular combination of hardware and software.

Correspondingly, the embodiments of the present invention further provide a computer storage medium, storing a computer program, and the computer program is configured to perform the data scheduling method of the embodiments of the present invention.

Although preferred embodiments of the present invention have been disclosed for the purpose of examples, a person skilled in the art is to realize that various improvements, increases, and replacements are also possible. Therefore, the scope of the present invention should not be limited to the foregoing embodiments, but is defined by the appended claims.

## Claims

1. A method for determining a data transmission mode in a 5G network, said method being performed by a terminal device, the method comprising:
receiving a data transmission mode determined and sent by a network device;
wherein receiving the data transmission mode comprises:
receiving an order comprising bearer information for indicating to change the data transmission mode, and the data transmission mode, wherein said data transmission mode comprises one of the following:
a link aggregation mode,
a link switching mode,
a carrier aggregation mode,
a packet duplication mode.

2. The method according to claim 1, wherein the receiving the data transmission mode comprises:
receiving the order further comprising the data transmission mode in a form of a media access control, MAC, control element, CE, or wherein the receiving the data transmission mode comprises:
receiving the order further comprising the data transmission mode in a form of a physical downlink control channel order or radio resource control, RRC, signaling.

3. A terminal device of a 5G network, comprising:
a communications unit configured to:
receive a data transmission mode determined and sent by a network device;
wherein the communications unit is configured to receive an order comprising bearer information for indicating to change the data transmission mode, and the data transmission mode, and wherein said data transmission mode comprises one of the following:
a link aggregation mode,
a link switching mode,
a carrier aggregation mode,
a packet duplication mode.

4. The terminal device according to claim 3, wherein the communications unit is configured to receive the order further comprising the data transmission mode in a form of a media access control, MAC, control element, CE, or
wherein the communications unit is configured to receive the order further comprising the data transmission mode in a form of a physical downlink control channel order or radio resource control, RRC, signaling.

## Patentansprüche

1. Verfahren zum Bestimmen eines Datenübertragungsmodus in einem 5G-Netzwerk, wobei das Verfahren von einem Endgerät durchgeführt wird, wobei das Verfahren Folgendes umfasst:
Empfangen eines von einem Netzwerkgerät bestimmten und gesendeten Datenübertragungsmodus;
wobei das Empfangen des Datenübertragungsmodus Folgendes umfasst:
Empfangen eines Auftrags, der Trägerinformationen enthält, um anzuzeigen, dass der Datenübertragungsmodus geändert werden soll, und des Datenübertragungsmodus,
wobei der Datenübertragungsmodus einen der folgenden Modi umfasst:
einen Link Aggregation-Modus,
einen Link Switching-Modus,
einen Carrier Aggregation-Modus,
einen Packet Duplication-Modus.

2. Verfahren nach Anspruch 1,
wobei das Empfangen des Datenübertragungsmodus Folgendes umfasst:
Empfangen des Auftrags, der ferner den Datenübertragungsmodus in Form eines Medienzugriffssteuerungs-, (MAC), Steuerelements (CE) umfasst, oder
wobei das Empfangen des Datenübertragungsmodus Folgendes umfasst:
Empfangen des Auftrags, der ferner den Datenübertragungsmodus in Form eines physischen Downlink-Steuerkanalauftrags oder einer RRC-Signalisierung (Radio Resource Control) umfasst.

3. Endgerät eines 5G-Netzwerks, das Folgendes umfasst:
eine Kommunikationseinheit, die für Folgendes konfiguriert ist:
Empfangen eines von einem Netzwerkgerät bestimmten und gesendeten Datenübertragungsmodus;
wobei die Kommunikationseinheit so konfiguriert ist,
dass sie einen Auftrag empfängt, der Trägerinformationen umfasst, um anzuzeigen, dass der Datenübertragungsmodus geändert werden soll, und den Datenübertragungsmodus, und wobei der Datenübertragungsmodus einen der folgenden Modi umfasst:
einen Link Aggregation-Modus,
einen Link Switching-Modus,
einen Carrier Aggregation-Modus,
einen Packet Duplication-Modus.

4. Endgerät gemäß Anspruch 3,
wobei die Kommunikationseinheit so konfiguriert ist, dass sie den Auftrag empfängt, der ferner den Datenübertragungsmodus in Form eines Medienzugriffssteuerungs-, (MAC), Steuerelements (CE) umfasst, oder
wobei die Kommunikationseinheit so konfiguriert ist, dass sie den Auftrag empfängt, der ferner den Datenübertragungsmodus in Form eines physischen Downlink-Steuerkanalauftrags oder einer RRC-Signalisierung (Radio Resource Control) umfasst.

## Revendications

1. Procédé de détermination d'un mode de transmission de données dans un réseau 5G, ledit procédé étant exécuté par un dispositif terminal, le procédé comprenant :
la réception d'un mode de transmission de données déterminé et envoyé par un dispositif de réseau ;
dans lequel la réception du mode de transmission de données comprend :
la réception d'un ordre comprenant des informations de porteuse pour indiquer de changer le mode de transmission de données, et le mode de transmission de données, dans lequel ledit mode de transmission de données comprend l'un des modes suivants :
un mode d'agrégation de liaison,
un mode de commutation de liaison,
un mode d'agrégation de porteuse,
un mode de duplication de paquet.

2. Procédé selon la revendication 1, dans lequel la réception du mode de transmission de données comprend :
la réception de l'ordre comprenant en outre le mode de transmission de données sous la forme d'un élément de commande, CE, de contrôle d'accès au support, MAC, ou
dans lequel la réception du mode de transmission de données comprend :
la réception de l'ordre comprenant en outre le mode de transmission de données sous la forme d'un ordre de canal physique de commande de liaison descendante ou d'une signalisation de contrôle de ressource radio, RRC.

3. Dispositif terminal d'un réseau 5G, comprenant:
une unité de communication configurée pour :
recevoir un mode de transmission de données déterminé et envoyé par un dispositif de réseau ;
dans lequel l'unité de communication est configurée pour recevoir un ordre comprenant des informations de porteuse pour indiquer de changer le mode de transmission de données, et le mode de transmission de données, dans lequel ledit mode de transmission de données comprend l'un des modes suivants :
un mode d'agrégation de liaison,
un mode de commutation de liaison,
un mode d'agrégation de porteuse,
un mode de duplication de paquet.

4. Dispositif terminal selon la revendication 3, dans lequel l'unité de communication est configurée pour recevoir l'ordre comprenant en outre le mode de transmission de données sous la forme d'un élément de commande, CE, de contrôle d'accès au support, MAC, ou
dans lequel l'unité de communication est configurée pour recevoir l'ordre comprenant en outre le mode de transmission de données sous la forme d'un ordre de canal physique de commande de liaison descendante ou d'une signalisation de contrôle de ressource radio, RRC.
